# EUROPEAN PATENT SPECIFICATION

(11) **EP 2 958 373 B1**
(45) Date of publication and mention of the grant of the patent: **28.02.2018**
(21) Application number: 14305945.9
(22) Date of filing: 19.06.2014
(51) Int. Cl.: H04W 36/24, H04W 24/02, H04W 24/10, H04W 64/00, H04W 36/16

(54) **System and method for managing a handover procedure**
System und Verfahren zur Verwaltung eines Weiterleitungsverfahrens
Système et procédé pour gérer une procédure de transfert

(43) Date of publication of application: 23.12.2015
(73) Proprietor: Alcatel-Lucent, 92100 Boulogne-Billancourt (FR)
(72) Inventor: Gacanin, Haris, 2018 Antwerpen (BE)
(74) Representative: Nokia Bell Patent Attorneys

(56) References cited:
- EP-A2- 2 219 402
- WO-A1-2013/020584
- GB-A- 2 492 616

## Description

### Field of Invention

Embodiments of the invention relate to the field of handover procedures in mobile wireless communication networks and in particular to systems and methods for managing a handover procedure in a mobile wireless communication network environment comprising a plurality of cells and a plurality of end user devices.

### Background

In mobile wireless communications, the handover process has turned out to be a fundamental feature. The user mobility between cells depends on it. A handover may have an impact on the user quality of service (QoS) due to the packet delivery experiencing a delay to the destination end. The availability of several cells such as femto access points (FAPs) in a particular area most likely increases the probability to have issues in the handover procedure, such as handover failures and call drops.

WO 2013/020584 A1 discloses a method for optimizing the mobility robustness of a mobile radio communication network with respect to user equipments which are to be handed over from a source cell to a target cell. The disclosed method is comprises detecting, in a certain time interval, handover problems that have occurred during that time interval, classifying those handover problems in categories, performing a statistical analysis on those handover problems and eventually adapting a network configuration parameter based on that statistical analysis.

GB 2 492 616 A discloses a method of determining a mobile terminal speed based on statistical metrics of measurements of signal strengths and comparing the statistical metric with mobility patterns which are stored in a database.

### Summary

The object of embodiments of the invention is to provide an improved handover procedure allowing the number of handover failures and call drops to be reduced.

A system and method for managing a handover procedure according to the invention are defined in the appended claims.

According to an embodiment of the invention there is provided a system for managing a handover procedure in a mobile wireless communication network environment comprising a plurality of cells and a plurality of user devices. Said system comprises a network parameter obtaining unit configured for obtaining network parameters from said plurality of cells and a user device parameter obtaining unit configured for obtaining user device activity parameters, from said plurality of user devices. The user device activity parameters are representative for the activity of each user device of said plurality of user devices. The system further comprises a calculation unit configured for calculating for each cell a network key performance indicator based on said network parameters, and for calculating for each user device a user device key performance indicator based on said user device activity parameters. The system further comprises a correlation unit configured for determining a correlation parameter by correlating the network key performance indicator of a certain cell of the plurality of cells with the user device key performance indicator of a certain user device of the plurality of user devices. Finally the system further comprises a handover management unit configured for determining whether or not to perform, for said certain user device, a handover to said certain cell based on said correlation parameter.

Embodiments of the invention are based *inter alia* on the insight that a handover procedure may be improved by using both network information and user device activity information in order to provide a sufficiently stable QoS. Embodiments of the invention are based on the inventive insight that enabling coordination between the user domain and the respective network domain allows for management of the network on a user specific basis. Instead of monitoring QoS on a general network level, QoS can be monitored more thoroughly on a more specific level, resulting in an improved management of user QoS.

According to an embodiment, for each user device, the correlation unit is configured for determining for each cell, a correlation parameter of the user device and that cell, such that for each user device, a list of correlation parameters is obtained corresponding with the plurality of cells. The handover management unit may then be configured to use the list to determine whether or not a handover is desirable, and if a handover is desirable, to select a suitable cell for the handover from the list.

According to an embodiment a user device activity parameter is representative for a location, or for a status or for a service requirement of the plurality of user devices. There may be used one or more user device activity parameters for each user device. In the context of the present application a status refers to connectivity information such as the interfaces enabled at the user device, e.g. information indicating whether or not mobile data, WIFI or Bluetooth is enabled. In the context of the present application a service requirement refers to a service or traffic requirement of the user device, such as information about the type of application a user device is running (for example email, browser, video streaming, etc.) and the settings of said currently used application (for example required video quality). By monitoring service requirements of the user devices, handover procedures can be managed based on those requirements. For example a user who is constantly streaming high quality videos on his device, can be handled with a higher priority with regard to a handover, compared to a user who only casually checks his emails on his device.

According to a further embodiment said user device activity parameters of said plurality of user devices comprise GPS coordinates of said plurality of user devices. By obtaining GPS coordinates of one or more users, their location can be triangulated with respect to each other. This information can be used to provide a better QoS for example by initiating a handover for a certain user who may find himself in a densely populated area that is covered by at least two cell of the network.

According to a preferred embodiment, the system further comprises a storage unit configured for storing a plurality of user device parameters over time, wherein the calculation unit is further configured for calculating said network key performance indicator based on said stored user device parameters over time. By storing obtained parameters, extra information may become available. Besides the actual obtained or measured parameters, which are a momentary impression, a behavior in time can be monitored or calculated. The storage unit may be storing e.g. location data over time, or service requirement data over time. In that way it will be possible to get an impression of the mobility of the user, or of the bandwidth requirements at a different times of the day, respectively.

In a further preferred embodiment, said calculation unit is configured for calculating for each user device the user device key performance indicator based on stored location parameters over time of said user device such that said user device key performance indicator is representative for the mobility of the user device. When for example GPS coordinates or other parameters representative for the location of a user device are stored over time, the mobility of the users can be calculated as a device key performance indicator. The mobility of the user will show whether a user is very mobile or rather stationary. When GPS coordinates over time of one user are spread out widely, one may presume that this user moves around a lot. Based on this information this user may enjoy a higher priority with regards to a handover, compared to a user who is very stationary, since the latter will not need a handover quite as often.

According to an embodiment, said network key performance indicator is representative for at least one of a location of a cell or a signal strength of a cell. When besides the location of the user devices, also the location of the cells can be obtained, relative distances between user devices and cells can be calculated. This information will allow for a fluent handover to a neighbouring cell of a user who is located at the outer area of lower coverage of a particular cell. In the context of the present application signal strength refers to the strength of the signal from said cell as received by a user device. A parameter representative for the signal strength is for example a reference signal strength indicator (RSSI).

In an embodiment said plurality of cells are 3G or 4G or LTE femtocells. Embodiments of the invention can particularly be used for indoor purposes. A typical setup could for example be a private wireless business network in an enterprise building.

According to another aspect of the invention there is provided a method for managing a handover procedure in a mobile wireless communication network environment comprising a plurality of cells and a plurality of user devices. Said method comprises obtaining network parameters from said plurality of cells and obtaining user device activity parameters, from said plurality of user devices, being representative for the activity of each user device of said plurality of user devices. The method further comprises calculating for each cell a network key performance indicator based on said network parameters and calculating for each user device a user device key performance indicator based on said user device activity parameters. The method further comprises determining a correlation parameter by correlating the network key performance indicator of a cell with the user device key performance indicator of a user device. Finally the method comprises determining whether or not to perform a handover for said user device, to said cell, depending on said correlation parameter.

According to an embodiment, for each user device, there is determined for each cell, a correlation parameter of the user device and that cell, such that for each user device, a list of correlation parameters is obtained corresponding with the plurality of cells. Said list may then be used to determine whether or not a handover is desirable, and if a handover is desirable, to select a suitable cell from the list.

According to an embodiment said user device activity parameters are representative for at least one of a location, a status or a service requirement of the plurality of user devices.

In a preferred embodiment said user device activity parameters of said plurality of user devices comprise GPS coordinates of said plurality of user devices.

In a further embodiment the method further comprises storing a plurality of user device parameters over time and calculating said network key performance indicator based on said stored user device parameters.

According to an embodiment, the method further comprises calculating for each user device the user device key performance indicator based on stored location parameters over time of said user device such that said user device key performance indicator is representative for the mobility of the user device.

In a further embodiment said network key performance indicator is representative for at least one of a location of a cell and a signal strength of a cell.

According to a preferred embodiment said plurality of cells are 3G or 4G or LTE femtocells.

According to a further aspect of the invention, there is provided a computer program comprising computer-executable instructions to perform the method, when the program is run on a computer, according to any one of the steps of any one of the embodiments disclosed above.

### Brief description of the figures

The accompanying drawings are used to illustrate presently preferred non-limiting exemplary embodiments of systems of the present invention. The above and other advantages of the features and objects of the invention will become more apparent and the invention will be better understood from the following detailed description when read in conjunction with the accompanying drawings, in which:
Figure 1 is a schematic drawing of an exemplary embodiment of a system for managing a handover procedure; and
Figure 2 is a flowchart illustrating an embodiment of an exemplary method for managing a handover.

### Description of embodiments

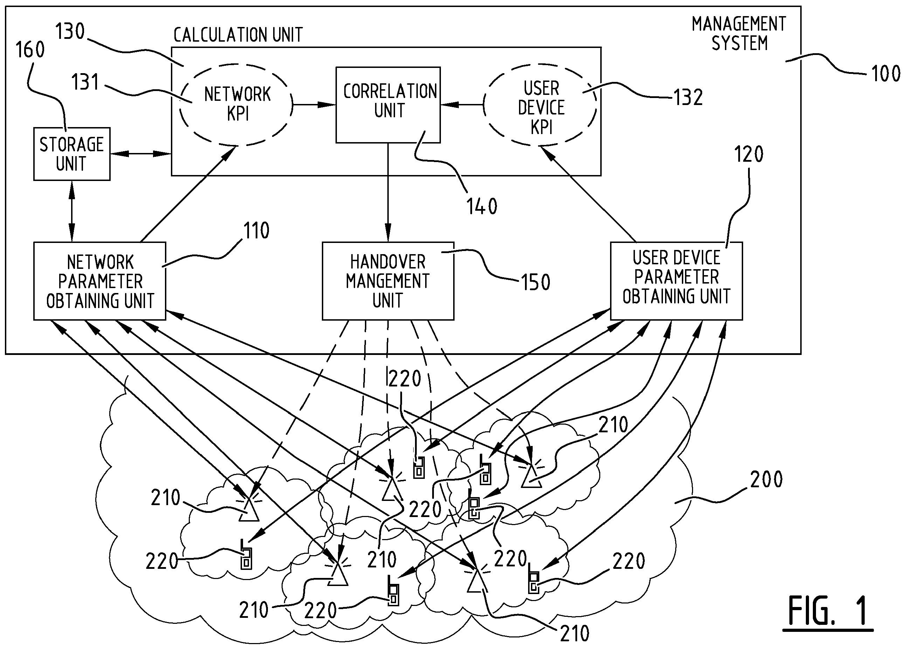

Figure 1 illustrates a system 100 for managing a handover procedure in a mobile wireless communication network environment 200 comprising a plurality of cells 210 and a plurality of user devices 220. The system 100 comprises a network parameter obtaining unit 110 configured for obtaining for each cell, at least one network parameter from said cell 210, and a user device parameter obtaining unit 120 configured for obtaining from each user device 220 at least one user device activity parameter representative for the activity of the user device 220. The system 100 further comprises a calculation unit 130 configured for calculating for each cell 210 a network key performance indicator 131 based on the at least one network parameter of said cell, and for calculating for each user device 220 a user device key performance indicator 132 based on the at least one user device activity parameter for said user device 220. The system 100 further comprises a correlation unit 140 configured for determining a correlation parameter by correlating said network key performance indicator 131 with said user device key performance indicator 132. More in particular, the correlation unit 140 may determine for each user device, a list of correlation parameters for the plurality of cells by correlating the network key performance indicator 131 of each cell with the user device key performance indicator 132 of that user device. Finally the system 100 further comprises a handover management unit 150 configured for determining whether or not to perform a handover procedure depending on said correlation parameter, and in particular to use the list to determine whether or not a handover is desirable, and if a handover is desirable, to select a suitable cell for the handover from the list.

According to an exemplary embodiment there may be collected one or more user device activity parameters which are representative for at least one of a location, a status or a service requirement of the plurality of user devices 220. The user device activity parameters can be for example representative for the (connectivity) status of the user device 220 meaning that information may be obtained about which interfaces the device has currently enabled or not enabled such as mobile data, WIFI or Bluetooth. When the considered network environment 200 is an indoor network, home or business, the status parameter may be used to establish a connection when a user enters the environment from outdoors (outside of the network environment 200). The network cells 210 will be able to detect the unmanaged user device 220 when it has enabled its LTE interface and the network cells will inform the management system 100 accordingly.

In another exemplary embodiment, a user activity parameter can be representative for the service or traffic requirements of the user device. These requirements will depend on which application is currently running (email, browser, video streaming, etc.) and the settings of said currently used application (for example required video quality). User device activity parameters can also be representative for the location of the user device 220, for example GPS coordinates can be obtained from the user device 220 to determine its location.

In a further exemplary embodiment, the management system 100 is provided with a user domain application programming interface (API) which enables the system 100 to connect directly to each of the user devices 220. The user device management may be done via an open mobile alliance device management (OMA/DM) protocol. The API may obtain user device parameters by sending a request for information to the user device, which is then handled by the OMA/DM protocol and answered by sending the requested information to the management system 100.

According to a preferred embodiment, the system further comprises a storage unit 160 configured for storing a plurality of user device parameters over time. The calculation unit 130 may then be configured for calculating said network key performance indicator based on said stored user device parameters. In an exemplary embodiment, the calculation unit 130 is configured for calculating for each user device 220 the user device key performance indicator based on stored location parameters over time of said user device such that said user device key performance indicator is representative for the mobility of the user device. By storing parameters over time which are representative for the location of the user device, such as GPS coordinates for example, an estimation of the mobility of that user can be made. Does he move around a lot (lots of different locations over time) or is he quite stationary (mostly the same location over time)? Knowledge on the mobility of the user may be relevant when considering handover procedures. Indeed, when a user moves around a lot, it is likely that handovers will be needed during his travel. This may be an incentive to give a higher priority concerning handover initiation to a user who moves a lot and uses applications needing mobile access while he is on the move, and to give a lower priority to a user who mainly remains at the same place.

According to an embodiment, said network key performance indicator is representative for at least a location of a cell 210 or a signal strength of a cell 210. The location of a cell 210 can be used to determine distances between said cell 210 and certain user devices 220. This information can be useful e.g. when many users are served by the same cell. When the QoS is deteriorating because of the high amount of users, the management system 100 can find out, based on the location of the user devices and the cells, for which user device it is best to perform a handover and to which (nearby) cell the handover need to be performed.

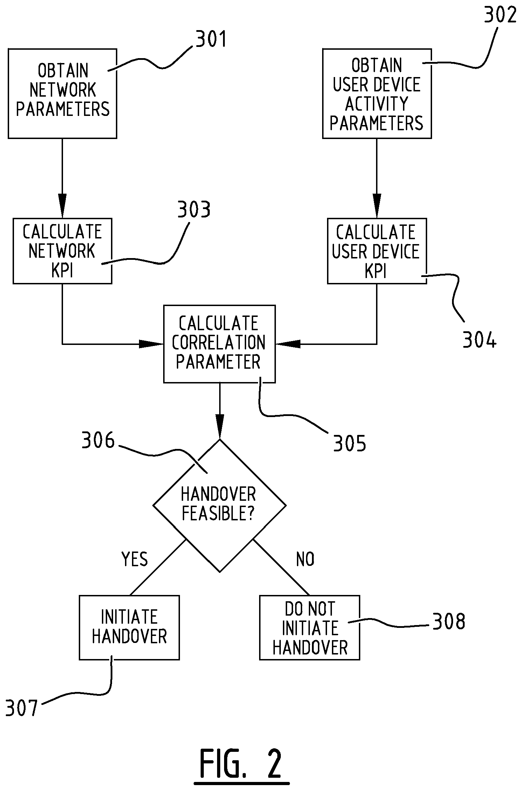

The flowchart of figure 2 illustrates an exemplary embodiment of a method for managing a handover procedure in a mobile wireless communication network environment comprising a plurality of cells and a plurality of user devices. The method comprises a step 301 of obtaining network parameters from said plurality of cells and a step 302 of obtaining user device activity parameters, from said plurality of user devices. A user activity parameter of a user device is representative for the activity of that user device. Next, key performance indicators will be calculated in steps 303 and 304. Step 303 comprises calculating for each cell a network key performance indicator based on said network parameters and step 304 comprises calculating for each user device a user device key performance indicator based on said user device activity parameters. The following step 305 comprises determining for each of said plurality of cells a correlation parameter by correlating said network key performance indicator with said user device key performance indicator. Finally the method comprises determining whether or not to perform a handover procedure for said user device to a cell depending on the correlation parameter for that cell, see steps 306, 307 and 308.

In a possible embodiment steps 301 and 302 are triggered by predefined alarming conditions. An exemplary alarming condition could be a rise in the amount of handover failures. This would lead to parameter collection in a particular area of the network. Another alarming condition could be a huge latency in the network. Since this is not a particularly localized problem, in this example parameters may be collected from all areas within the network.

In an embodiment of the method the user device activity parameters, which are obtained in step 302, are representative for at least one of a location, a status or a service requirement of the plurality of user devices. The user device may be controlled via OMA-DM protocol to report its location and/or status and/or service requirements (depending on device type/model and operating system only the current and last bitrate may be available).

In a further embodiment the network key performance indicator, which is calculated in step 303, is representative for at least a location of a cell or a signal strength of a cell. The location of a cell can be used to determine distances between said cell and a user device. The location could be calculated from parameters such as GPS coordinates. On the other hand, the signal strength of a cell is a measure of how strong the signal from said cell is received by a particular user device. A parameter which is representative for signal strength is for example a reference signal strength indicator (RSSI). In an embodiment these network parameters are collected (step 301) via TR-196.

In a further embodiment the method further comprises storing a plurality of user device parameters over time and calculating the network key performance indicator based on said stored user device parameters. According to an embodiment, the method further comprises calculating for each user device the user device key performance indicator based on stored location parameters over time of said user device such that said user device key performance indicator is representative for the mobility of the user device.

In steps 304 and 305 network and device parameters are processed to provide key performance indicators (KPIs) that are used for correlation. The idea is to cross-correlate KPIs from different domains (network and device).

In an embodiment step 302 comprises collecting the GPS coordinates of the user device via OMA-DM. An additional step of requesting a number of previous reference device locations from a storage, may be performed before step 304. In the case of a home user the mobility is limited and the user may potentially reach a low coverage zone. On the other hand, in the case of outdoor public femtocell deployments the user mobility has a large impact. After the additional step, the user device mobility and/or the user device location is estimated to generate a KPI (probability) of user mobility and/or of user location.
Meanwhile at the network side, step 301 comprises collecting the RSSIs from a number of cells. Then for each cell the RSSIs are used to estimate the expected quality of service for a particular cell (for cell_1 QoS is estimated via its RSSI_1, etc.). Thus, the target is to test if the measurement from cell_k (RSSI_k) satisfies the mobile device service requirements. The cells may be ordered in a location table from the top (highest throughput) to the bottom (lowest throughput) during step 303. Next, during step 305, the user device estimated location and/or mobility (KPI) is correlated with the available network table to obtain the cells that may support the required mobile device services. Finally it is checked whether a handover would be feasible in step 306 and action will be taken accordingly.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection, which is determined by the appended claims.

## Claims

1. A system (100) for managing a handover procedure in a mobile wireless communication network environment (200) comprising a plurality of cells (210) and a plurality of user devices (220), said system comprising:
- a network parameter obtaining unit (110) configured for obtaining network parameters from said plurality of cells;
- a user device parameter obtaining unit (120) configured for obtaining user device activity parameters, from said plurality of user devices, being representative for the activity of each user device of said plurality of user devices, wherein said user device activity parameters are representative for at least one of a location, a status or a service requirement of the plurality of user devices (220);
- a calculation unit (130) configured for calculating for each cell a network key performance indicator (131) based on said network parameters, wherein said network key performance indicator (131) is representative for at least a location of a cell (210) or a signal strength of a cell (210), and for calculating for each user device a user device key performance indicator (132) based on said user device activity parameters;
- a correlation unit (140) configured for determining a correlation parameter by correlating the network key performance indicator of a cell of the plurality of cells with the user device key performance indicator of a user device of the plurality of user devices;
- a handover management unit (150) configured for determining for said user device whether or not to perform a handover to said cell, based on said correlation parameter.

2. The system (100) of claim 1 wherein said user device activity parameters of said plurality of user devices (220) comprise GPS coordinates of said plurality of user devices (220).

3. The system (100) of any of the previous claims, further comprising a storage unit (160) configured for storing a plurality of user device parameters over time;
and wherein the calculation unit (130) is further configured for calculating said network key performance indicator (131) based on said stored user device parameters over time.

4. The system (100) of claim 3, wherein said calculation unit is configured for calculating for each user device the user device key performance indicator (132) based on stored location parameters over time of said user device such that said user device key performance indicator (132) is representative for the mobility of the user device.

5. The system (100) of any one of the previous claims, wherein said plurality of cells are 3G or 4G or LTE femtocells.

6. The system (100) of any one of the previous claims, wherein the correlation unit (140) is configured for determining for each cell, a correlation parameter of the user device and that cell, such that for each user device, a list of correlation parameters is obtained corresponding with the plurality of cells (210), wherein the handover management unit (150) is configured to use the list to determine whether or not a handover is desirable, and if a handover is desirable, to select a suitable cell for the handover from the list.

7. A method for managing a handover procedure in a mobile wireless communication network environment comprising a plurality of cells and a plurality of user devices, said method comprising:
- obtaining network parameters (301) from said plurality of cells;
- obtaining user device activity parameters (302), from said plurality of user devices, being representative for the activity of each user device of said plurality of user devices, wherein said user device activity parameters are representative for at least one of a location, a status or a service requirement of the plurality of user devices (220);
- calculating for each cell a network key performance indicator (303) based on said network parameters, wherein said network key performance indicator (131) is representative for at least a location of cell and a signal strength of a cell, and calculating for each user device a user device key performance indicator (304) based on said user device activity parameters;
- determining a correlation parameter (305) by correlating the network key performance indicator of a cell of the plurality of cells with the user device key performance indicator of a user device of the plurality of user devices;
- determining (306, 307, 308) whether or not to perform for said user device, a handover procedure to said cell depending on said correlation parameter.

8. The method of claim 7, further comprising storing a plurality of user device parameters over time; and
calculating said network key performance indicator (303) based on said stored user device parameters.

9. The method of claim 8, further comprising calculating for each user device the user device key performance indicator (304) based on stored location parameters over time of said user device such that said user device key performance indicator (132) is representative for the mobility of the user device.

10. The method of any one of the claims 7-9, wherein said plurality of cells (210) are 3G or 4G or LTE femtocells.

11. A computer program comprising computer-executable instructions to perform the method, when the program is run on a computer, of any one of the claims 7-10.

## Patentansprüche

1. System (100) zur Verwaltung eines Handover-Vorgangs in einer mobilen, drahtlosen Kommunikationsnetzwerkumgebung (200), umfassend eine Vielzahl von Zellen (210) und eine Vielzahl von Benutzervorrichtungen (220), wobei das besagte System Folgendes umfasst:
- eine Netzwerkparameter-Erhaltungseinheit (110), die konfiguriert ist, um Netzwerkparameter von der besagten Vielzahl von Zellen zu erhalten;
- eine Benutzervorrichtungsparameter-Erhaltungseinheit (120), die konfiguriert ist, um Benutzervorrichtungsaktivitätsparameter, von der besagten Vielzahl von Benutzervorrichtungen, zu erhalten, die bezeichnend sind für die Aktivität jeder Benutzervorrichtung der besagten Vielzahl von Benutzervorrichtungen, wobei die besagten Benutzervorrichtungsaktivitätsparameter bezeichnend sind für mindestens eines aus einem Ort, einem Status oder einer Dienstanforderung der Vielzahl von Benutzervorrichtungen (220);
- eine Recheneinheit (130), die konfiguriert ist, um für jede Zelle eine Netzwerkleistungskennzahl (131) basierend auf den besagten Netzwerkparametern zu berechnen, wobei die besagte Netzwerkleistungskennzahl (131) bezeichnend ist für mindestens einen Ort einer Zelle (210) oder eine Signalstärke einer Zelle (210), und um für jede Benutzervorrichtung eine Benutzervorrichtungsleistungskennzahl (132) basierend auf den besagten Benutzervorrichtungsaktivitätsparametern zu berechnen;
- eine Korrelationseinheit (140), die konfiguriert ist, um einen Korrelationsparameter durch Korrelieren der Netzwerkleistungskennzahl einer Zelle aus der Vielzahl von Zellen mit der Benutzervorrichtungsleistungskennzahl einer Benutzervorrichtung aus der Vielzahl von Benutzervorrichtungen zu bestimmen;
- eine Handover-Verwaltungseinheit (150), die konfiguriert ist, um für die besagte Benutzervorrichtung zu bestimmen, ob ein Handover an die besagte Zelle, basierend auf dem besagten Korrelationsparameter, durchzuführen ist oder nicht.

2. System (100) nach Anspruch 1, wobei die besagten Benutzervorrichtungsaktivitätsparameter der besagten Vielzahl von Benutzervorrichtungen (220) GPS-Koordinaten der besagten Vielzahl von Benutzervorrichtungen (220) umfassen.

3. System (100) nach einem beliebigen der vorstehenden Ansprüche, weiterhin umfassend eine Speichereinheit (160), die konfiguriert ist, um eine Vielzahl von Benutzervorrichtungsparametern im Zeitablauf zu speichern;
und wobei die Recheneinheit (130) weiterhin konfiguriert ist, um die besagte Netzwerkleistungskennzahl (131) basierend auf den besagten gespeicherten Benutzervorrichtungsparametern im Zeitablauf zu berechnen.

4. System (100) nach Anspruch 3, wobei die besagte Recheneinheit konfiguriert ist, um für jede Benutzervorrichtung die Benutzervorrichtungsleistungskennzahl (132) basierend auf gespeicherten Ortsparametern im Zeitablauf der besagten Benutzervorrichtung zu berechnen, so dass die besagte Benutzervorrichtungsleistungskennzahl (132) bezeichnend ist für die Mobilität der Benutzervorrichtung.

5. System (100) nach einem beliebigen der vorstehenden Ansprüche, wobei die besagte Vielzahl von Zellen 3G- oder 4G- oder LTE-Femtozellen sind.

6. System (100) nach einem beliebigen der vorstehenden Ansprüche, wobei die Korrelationseinheit (140) konfiguriert ist, um für jede Zelle einen Korrelationsparameter der Benutzervorrichtung und dieser Zelle zu bestimmen, so dass für jede Benutzervorrichtung eine Liste von Korrelationsparametern in Übereinstimmung mit der Vielzahl von Zellen (210) erhalten wird, wobei die Handover-Verwaltungseinheit (150) konfiguriert ist, um die Liste zu verwenden um zu bestimmen, ob ein Handover wünschenswert ist oder nicht, und falls ein Handover wünschenswert ist, um eine geeignete Zelle für das Handover aus der Liste auszuwählen.

7. Verfahren zur Verwaltung eines Handover-Vorgangs in einer mobilen, drahtlosen Kommunikationsnetzwerkumgebung, umfassend eine Vielzahl von Zellen und eine Vielzahl von Benutzervorrichtungen, wobei das besagte Verfahren Folgendes umfasst:
- Erhalten von Netzwerkparametern (301) von der besagten Vielzahl von Zellen;
- Erhalten von Benutzervorrichtungsaktivitätsparametern (302), von der besagten Vielzahl von Benutzervorrichtungen, die bezeichnend sind für die Aktivität jeder Benutzervorrichtung der besagten Vielzahl von Benutzervorrichtungen, wobei die besagten Benutzervorrichtungsaktivitätsparameter bezeichnend sind für mindestens eines aus einem Ort, einem Status oder einer Dienstanforderung der Vielzahl von Benutzervorrichtungen (220);
- Berechnen, für jede Zelle, einer Netzwerkleistungskennzahl (303) basierend auf den besagten Netzwerkparametern, wobei die besagte Netzwerkleistungskennzahl (131) bezeichnend ist für mindestens einen Ort einer Zelle und eine Signalstärke einer Zelle, und Berechnen, für jede Benutzervorrichtung, einer Benutzervorrichtungsleistungskennzahl (304) basierend auf den besagten Benutzervorrichtungsaktivitätsparametern;
- Bestimmen eines Korrelationsparameters (305) durch Korrelieren der Netzwerkleistungskennzahl einer Zelle aus der Vielzahl von Zellen mit der Benutzervorrichtungsleistungskennzahl einer Benutzervorrichtung aus der Vielzahl von Benutzervorrichtungen;
- Bestimmen (306, 307, 308), ob für die besagte Benutzervorrichtung ein Handover-Vorgang an die besagte Zelle in Abhängigkeit von dem besagten Korrelationsparameter durchzuführen ist oder nicht.

8. Verfahren nach Anspruch 7, weiterhin umfassend das Speichern einer Vielzahl von Benutzervorrichtungsparametern im Zeitablauf; und
Berechnen der besagten Netzwerkleistungskennzahl (303) basierend auf den besagten gespeicherten Benutzervorrichtungsparametern.

9. Verfahren nach Anspruch 8, weiterhin umfassend das Berechnen, für jede Benutzervorrichtung, der Benutzervorrichtungsleistungskennzahl (304) basierend auf gespeicherten Ortsparametern im Zeitablauf der besagten Benutzervorrichtung, so dass diese Benutzervorrichtungsleistungskennzahl (132) bezeichnend ist für die Mobilität der Benutzervorrichtung.

10. Verfahren nach einem beliebigen der Ansprüche 7-9, wobei die besagte Vielzahl von Zellen (210) 3G- oder 4G- oder LTE-Femtozellen sind.

11. Computerprogramm, umfassend computerausführbare Befehle zum Durchführen des Verfahrens nach einem beliebigen der Ansprüche 7-10, wenn das Programm auf einem Computer gestartet wird.

## Revendications

1. Système (100) pour gérer une procédure de transfert dans un environnement de réseau de communication mobile sans fil (200) comprenant une pluralité de cellules (210) et une pluralité de dispositifs d'utilisateur (220), ledit système comprenant :
- une unité d'obtention de paramètres de réseau (110) configurée pour obtenir des paramètres de réseau à partir de ladite pluralité de cellules ;
- une unité d'obtention de paramètres de dispositif d'utilisateur (120) configurée pour obtenir des paramètres d'activité de dispositif d'utilisateur, à partir de ladite pluralité de dispositifs d'utilisateur, représentatifs de l'activité de chaque dispositif d'utilisateur parmi ladite pluralité de dispositifs d'utilisateur, dans lequel lesdits paramètres d'activité de dispositif d'utilisateur sont représentatifs d'au moins un élément parmi un emplacement, un état et une exigence de service de la pluralité de dispositifs d'utilisateur (220) ;
- une unité de calcul (130) configurée pour calculer pour chaque cellule un indicateur clé de performance de réseau (131) sur la base desdits paramètres de réseau, dans lequel ledit indicateur clé de performance de réseau (131) est représentatif d'au moins un emplacement d'une cellule (210) ou d'une intensité de signal d'une cellule (210), et pour calculer pour chaque dispositif d'utilisateur un indicateur clé de performance de dispositif d'utilisateur (132) sur la base desdits paramètres d'activité de dispositif d'utilisateur ;
- une unité de corrélation (140) configurée pour déterminer un paramètre de corrélation en mettant en corrélation l'indicateur clé de performance de réseau d'une cellule parmi la pluralité de cellules avec l'indicateur clé de performance de dispositif d'utilisateur d'un dispositif d'utilisateur parmi la pluralité de dispositifs d'utilisateur ;
- une unité de gestion de transfert (150) configurée pour déterminer pour ledit dispositif d'utilisateur s'il faut ou non effectuer un transfert vers ladite cellule, sur la base dudit paramètre de corrélation.

2. Système (100) selon la revendication 1 dans lequel lesdits paramètres d'activité de dispositif d'utilisateur parmi ladite pluralité de dispositifs d'utilisateur (220) comprennent des coordonnées GPS de ladite pluralité de dispositifs d'utilisateur (220).

3. Système (100) selon l'une quelconque des revendications précédentes, comprenant en outre une unité de stockage (160) configurée pour stocker une pluralité de paramètres de dispositif d'utilisateur dans le temps ;
et dans lequel l'unité de calcul (130) est en outre configurée pour calculer ledit indicateur clé de performance de réseau (131) sur la base desdits paramètres de dispositif d'utilisateur stockés dans le temps.

4. Système (100) selon la revendication 3, dans lequel ladite unité de calcul est configurée pour calculer pour chaque dispositif d'utilisateur l'indicateur clé de performance de dispositif d'utilisateur (132) sur la base de paramètres d'emplacement stockés dans le temps dudit dispositif d'utilisateur de sorte que ledit indicateur clé de performance de dispositif d'utilisateur (132) soit représentatif de la mobilité du dispositif d'utilisateur.

5. Système (100) selon l'une quelconque des revendications précédentes, dans lequel ladite pluralité de cellules sont des femtocellules 3G ou 4G ou LTE.

6. Système (100) selon l'une quelconque des revendications précédentes, dans lequel l'unité de corrélation (140) est configurée pour déterminer pour chaque cellule, un paramètre de corrélation du dispositif d'utilisateur et de cette cellule, de sorte que pour chaque dispositif d'utilisateur une liste de paramètres de corrélation correspondant à la pluralité de cellules (210) soit obtenue, dans lequel l'unité de gestion de transfert (150) est configurée pour utiliser la liste afin de déterminer si un transfert est souhaitable ou non, et si un transfert est souhaitable, pour choisir une cellule appropriée pour le transfert à partir de la liste.

7. Procédé pour gérer une procédure de transfert dans un environnement de réseau de communication mobile sans fil comprenant une pluralité de cellules et une pluralité de dispositifs d'utilisateur, ledit procédé comprenant les étapes suivantes :
- obtenir des paramètres de réseau (301) à partir de ladite pluralité de cellules ;
- obtenir des paramètres d'activité de dispositif d'utilisateur (302), à partir de ladite pluralité de dispositifs d'utilisateur, représentatifs de l'activité de chaque dispositif d'utilisateur parmi ladite pluralité de dispositifs d'utilisateur, dans lequel lesdits paramètres d'activité de dispositif d'utilisateur sont représentatifs d'au moins un élément parmi un emplacement, un état et une exigence de service de la pluralité de dispositifs d'utilisateur (220) ;
- calculer pour chaque cellule un indicateur clé de performance de réseau (303) sur la base desdits paramètres de réseau, dans lequel ledit indicateur clé de performance de réseau (131) est représentatif d'au moins un emplacement d'une cellule et d'une intensité de signal d'une cellule, et calculer pour chaque dispositif d'utilisateur un indicateur clé de performance de dispositif d'utilisateur (304) sur la base desdits paramètres d'activité de dispositif d'utilisateur ;
- déterminer un paramètre de corrélation (305) en mettant en corrélation l'indicateur clé de performance de réseau d'une cellule parmi la pluralité de cellules avec l'indicateur clé de performance de dispositif d'utilisateur d'un dispositif d'utilisateur parmi la pluralité de dispositifs d'utilisateur ;
- déterminer (306, 307, 308) s'il faut effectuer ou non pour ledit dispositif d'utilisateur une procédure de transfert vers ladite cellule en fonction dudit paramètre de corrélation.

8. Procédé selon la revendication 7, comprenant en outre le stockage d'une pluralité de paramètres de dispositif d'utilisateur dans le temps ; et
calculer ledit indicateur clé de performance de réseau (303) sur la base desdits paramètres de dispositif d'utilisateur stockés.

9. Procédé selon la revendication 8, comprenant en outre le calcul pour chaque dispositif d'utilisateur de l'indicateur clé de performance de dispositif d'utilisateur (304) sur la base de paramètres d'emplacement stockés dans le temps dudit dispositif d'utilisateur de sorte que ledit indicateur clé de performance de dispositif d'utilisateur (132) soit représentatif de la mobilité du dispositif d'utilisateur.

10. Procédé selon l'une quelconque des revendications 7 à 9, dans lequel ladite pluralité de cellules (210) sont des femtocellules 3G ou 4G ou LTE.

11. Programme informatique comprenant des instructions exécutables par un ordinateur pour réaliser le procédé, lorsque le programme est exécuté sur un ordinateur, selon l'une quelconque des revendications 7 à 10.
